(19)

**Europäisches Patentamt**
**European Patent Office**
**Office européen des brevets**

(11)  **EP 3 663 887 A1**

(12)  **DEMANDE DE BREVET EUROPEEN**

(43) Date de publication:
**10.06.2020  Bulletin 2020/24**

(21) Numéro de dépôt: **19212864.3**

(22) Date de dépôt: **02.12.2019**

(51) Int Cl.:
***G05D 1/10*** *(2006.01)*

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **04.12.2018  FR 1872282**

(71) Demandeur: **Thales**
**92400 Courbevoie (FR)**

(72) Inventeurs:
• **ROGER, Michel**
  **31036 TOULOUSE (FR)**
• **DE JAUREGUIBERRY, Adrien**
  **31036 TOULOUSE (FR)**
• **DEKER, Guy**
  **31036 TOULOUSE (FR)**

(74) Mandataire: **Lavoix**
  **2, place d'Estienne d'Orves**
  **75441 Paris Cedex 09 (FR)**

(54)  **DISPOSITIF ÉLECTRONIQUE, ET PROCÉDÉ, DE DÉTERMINATION AUTOMATIQUE D'INFORMATIONS DE PILOTAGE D'UN ENGIN MOBILE ACCOMPAGNATEUR D'UN ENGIN MOBILE LEADER, PROGRAMME D'ORDINATEUR ASSOCIÉ**

(57)  Dispositif (1) de détermination automatique d'informations de pilotage d'un engin mobile accompagnateur (A2) d'un engin mobile leader (A1), ledit dispositif étant adapté pour collecter des données de localisation de l'engin mobile leader parmi des données de localisation effective issues de mesures relatives à la localisation courante de l'engin mobile leader et des données de trajectoire courante de l'engin mobile accompagnateur et pour déterminer, en fonction desdites données de localisation collectées, des informations de pilotage de l'engin mobile accompagnateur en fonction d'un ensemble d'au moins deux valeurs à respecter par rapport à la localisation définie par les données collectées, lesdites valeurs à respecter étant représentatives de valeurs comprises parmi : une valeur minimum d'étagement, une valeur minimum de retrait, une valeur minimum d'écartement.

FIG.6

EP 3 663 887 A1

**Description**

La présente invention concerne le domaine du guidage d'engins mobiles en formation.

Dans le domaine du vol en formation par exemple, les pilotes actuellement doivent définir un avion « leader » qui servira de guide pour les autres avions quelquefois appelés « ailiers » ou « accompagnateurs ». Les pilotes de ces avions accompagnateurs pilotent à vue pour assurer le suivi de leur leader. Historiquement, les vols en formation sont réalisés en respectant des règles qui spécifient les responsabilités de tous les acteurs. Ainsi, typiquement le leader doit garder une vitesse constante en ne jouant pas avec les gaz, rester loin des régimes extrêmes afin de laisser toujours une marge aux accompagnateurs pour accélérer ou décélérer, effectuer les transitions avec progressivité en donnant une anticipation maximale, transmettre les tops, les consignes de vitesse, les altitudes et les caps en temps opportun. Et le pilote d'un avion accompagnateur doit assurer la sécurité en ayant toujours un œil sur le leader et les autres accompagnateurs dans son champ de vision et maintenir une position lui permettant de se dégager si nécessaire.

L'espacement entre les engins mobiles en formation, typiquement les aéronefs dans un vol en formation, est le paramètre qui dimensionne le type de mission à réaliser.

Dans un vol en formation, l'espacement est défini ainsi, selon chaque plan caractéristique :

- l'étagement représente l'écart entre les plans horizontaux des aéronefs leader et ailier et se pilote avec la commande de profondeur ;
- le retrait est le décalage longitudinal entre les avions et se pilote avec les gaz ;
- l'écartement est l'écart latéral entre les avions et se pilote avec les ailerons ou la gouverne de direction.

La tenue de ces espacements est faite aujourd'hui manuellement et par exemple dans l'ordre suivant : étagement, retrait, écartement.

Si entre avions, le vol en formation existe, il en est autrement pour la configuration où un avion leader est accompagné d'un aéronef sans pilote. Il n'existe pas de solution car un aéronef accompagnateur sans pilote ne saurait être capable d'assurer à vue le suivi de son leader. Même si cet aéronef accompagnateur a bien un pilote au sol, le vol en formation exige une réactivité que la seule latence de communication entre le sol et le bord peut rendre rédhibitoire. Or, il pourrait être utile qu'un engin mobile accompagnateur sans pilote puisse voler en formation, de manière à assurer une aide à la mission de protection de son engin mobile leader.

A cet effet, suivant un premier aspect, l'invention propose un dispositif électronique de détermination d'informations de pilotage d'un engin mobile accompagnateur d'un engin mobile leader, ces informations étant des consignes de pilotage de l'engin mobile accompagnateur et/ou des écarts de position entre une position courante dudit engin mobile leader et une position courante dudit engin mobile accompagnateur, caractérisé en ce qu'il est adapté pour collecter des données de localisation de l'engin mobile leader parmi des données de localisation effective issues de mesures relatives à la localisation courante de l'engin mobile leader et des données de trajectoire cible de l'engin mobile leader et pour déterminer, en fonction desdites données de localisation collectées, des informations de pilotage de l'engin mobile accompagnateur en fonction d'un ensemble d'au moins deux valeurs à respecter par rapport à la localisation définie par les données collectées, lesdites valeurs à respecter étant représentatives de valeurs comprises parmi : une valeur minimum d'étagement, une valeur minimum de retrait, une valeur minimum d'écartement.

La présente invention propose une solution permettant le guidage d'engins mobiles en formation, notamment, mais pas seulement, d'un engin mobile accompagnateur sans pilote. Cette solution s'appuie sur l'automatisation de l'accompagnement rendant l'engin mobile accompagnateur autonome pour suivre son leader.

Dans des modes de réalisation, le dispositif électronique de détermination d'informations de pilotage suivant l'invention comporte en outre une ou plusieurs des caractéristiques suivantes :

- ce dispositif est adapté, lors de la détermination des informations de pilotage, pour sélectionner une méthode de calcul parmi différentes méthodes de calcul, en fonction, parmi les données dernièrement collectées, de la présence ou de l'absence de données d'une trajectoire cible de l'engin mobile leader et de la présence ou de l'absence de données de localisation effective issues de mesures relatives à la localisation courante de l'engin mobile leader ;
- il est adapté pour déterminer, relativement à chacune d'au moins deux dimensions parmi les dimensions longitudinale, verticale et latérale associées auxdites au moins deux valeurs à respecter, les informations de pilotage, en sélectionnant pour chacune indépendamment, la méthode de calcul des informations relative à ladite dimension parmi différentes méthodes de calcul en fonction de la présence ou de l'absence, pour ladite dimension, desdites données de localisation effective issues de mesures relatives à la localisation courante de l'engin mobile leader et/ou desdites données de trajectoire cible de l'engin mobile leader ;

- il est adapté pour sélectionner un mode de vol en formation parmi plusieurs modes de vol en formation chacun associés à un ensemble différent de valeurs à respecter, ledit dispositif étant adapté pour modifier, en fonction desdites données de localisation effective et/ou de trajectoire cible collectées, ledit mode de vol en formation, en fonction :

- dans les dernières données collectées, de la présence ou de l'absence de données extraites d'une trajectoire cible et de la présence ou de l'absence de données de localisation effective issues de mesures relatives à la localisation courante de l'engin mobile leader ; et/ou
- de la comparaison entre la précision des données de localisation effective issues de mesures relatives à la localisation courante de l'engin mobile leader et des valeurs d'écart minimum de l'ensemble des valeurs d'écart minimum ;

- il est adapté pour comparer, parmi les données collectées, les données de localisation effective issues de mesures relatives à la localisation courante de l'engin mobile leader et les données de trajectoire cible de l'engin mobile leader, détecter une situation de non-suivi de trajectoire en cas d'écart supérieur à un seuil déterminé ;
- lequel lesdites valeurs à respecter sont des valeurs parmi une dérivée temporelle d'une valeur minimum d'étagement, une dérivée temporelle d'une valeur minimum de retrait, une dérivée temporelle d'une valeur minimum d'écartement.

Suivant un deuxième aspect, la présente invention propose un engin mobile accompagnateur d'un engin mobile leader, comprenant un dispositif électronique de détermination de informations de pilotage suivant le premier aspect de l'invention et un module de pilotage automatique, semi-automatique ou assisté, adapté pour piloter automatiquement ledit engin en fonction desdites informations.

Suivant un troisième aspect, la présente invention propose un procédé de détermination d'informations de pilotage d'un engin mobile accompagnateur d'un engin mobile leader, ces informations étant des consignes de pilotage de l'engin mobile accompagnateur et/ou des écarts de position entre une position courante dudit engin mobile leader et une position courante dudit engin mobile accompagnateur, ledit procédé étant caractérisé en ce qu'il comprend les étapes mises en œuvre par un module électronique de traitement et consistant à :

- collecter des données de localisation de l'engin mobile leader parmi des données de localisation effective issues de mesures relatives à la localisation courante de l'engin mobile leader et des données de trajectoire cible de l'engin mobile leader et
- déterminer, en fonction desdites données de localisation collectées, des informations de pilotage de l'engin mobile accompagnateur en fonction d'un ensemble d'au moins deux valeurs à respecter par rapport à la localisation définie par les données collectées, lesdites valeurs à respecter étant représentatives de valeurs comprises parmi : une valeur minimum d'étagement, une valeur minimum de retrait, une valeur minimum d'écartement.

Dans des modes de réalisation, le procédé de détermination automatique d'informations de pilotage d'un engin mobile accompagnateur d'un engin mobile leader suivant l'invention comporte en outre une ou plusieurs des caractéristiques suivantes :

- il comprend une étape de sélection, lors de la détermination des informations de pilotage, d'une méthode de calcul parmi différentes méthodes de calcul, en fonction, parmi les données dernièrement collectées, de la présence ou de l'absence de données d'une trajectoire cible de l'engin mobile leader et de la présence ou de l'absence de données de localisation effective issues de mesures relatives à la localisation courante de l'engin mobile leader ;
- il comprend une étape de détermination, relativement à chacune d'au moins deux dimensions parmi les dimensions longitudinale, verticale et latérale associées auxdites au moins deux valeurs à respecter, les informations de pilotage, en sélectionnant pour chacune indépendamment, la méthode de calcul des informations relative à ladite dimension parmi différentes méthodes de calcul en fonction de la présence ou de l'absence, pour ladite dimension, desdites données de localisation effective issues de mesures relatives à la localisation courante de l'engin mobile leader et/ou desdites données de trajectoire cible de l'engin mobile leader.

Suivant un quatrième aspect, la présente invention propose un programme d'ordinateur comportant des instructions logicielles qui, lorsqu'elles sont exécutées par un ordinateur, mettent en œuvre un procédé tel que défini ci-dessus.

Ces caractéristiques et avantages de l'invention apparaîtront à la lecture de la description qui va suivre, donnée uniquement à titre d'exemple, et faite en référence aux dessins annexés, sur lesquels :

[Fig 1] la figure 1 représente une vue illustrant les paramètres d'espacement dans un mode de réalisation de l'invention appliquée au vol en formation ;

[Fig 2] la figure 2 est une vue d'un dispositif de détermination de consignes de pilotage dans un mode de réalisation de l'invention ;

[Fig 3] la figure 3 est un organigramme d'étapes mises en œuvre dans un mode de réalisation de l'invention ;

[Fig 4] la figure 4 est un organigramme d'étapes mises en œuvre dans un mode de réalisation de l'invention ;

[Fig 5] la figure 5 illustre le calcul de consignes de guidage verticales ;

[Fig 6] la figure 6 illustre le calcul de consignes de guidage sur tous les axes (référentiel commun).

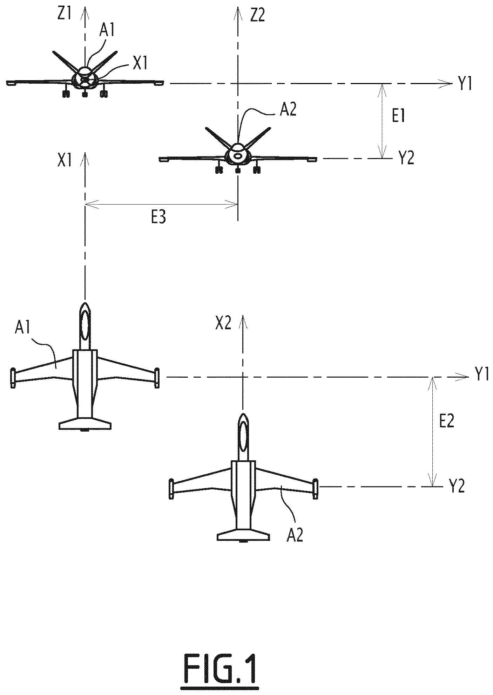

La figure 1 représente, dans un mode de réalisation de l'invention, des aéronefs leader A1 et ailier A2 dans un vol en formation, et les axes Xi, Yi, Zi, axes respectivement longitudinal, latéral et vertical de l'aéronef Ai, i= 1, 2 : la partie supérieure de la figure 1 est une vue arrière par rapport au plan vertical YiZi tandis que la partie inférieure est une vue de dessus du plan horizontal Xi, Yi de l'aéronef.

L'espacement est représenté par l'étagement E1, le retrait E2 et l'écartement, E3. Dans le mode de réalisation considéré, l'aéronef leader A1 est un avion avec pilote et l'aéronef accompagnateur A2 est un aéronef par exemple sans pilote.

Dans le mode de réalisation considéré, ils sont équipés chacun d'un système de gestion de vol, en anglais « Flight Management System » ou FMS, et d'un pilote automatique (non représentés). L'aéronef accompagnateur A2 comprend en outre un dispositif électronique de détermination automatique de consignes de pilotage 1, qui dans un mode de réalisation, est intégré au sein de FMS.

Le dispositif de détermination automatique de consignes de pilotage 1 est adapté pour collecter des données de localisation de l'aéronef leader A1 et pour déterminer, en fonction notamment des données de localisation collectées, des consignes de pilotage de l'aéronef accompagnateur A2 en fonction de valeurs minimum fixées à respecter d'étagement, de retrait et d'écartement.

Le FMS, par exemple dispose des fonctions suivantes décrites dans la norme ARINC 702 (Advanced Flight Management Computer System, Dec 1996) :

Navigation (LOCNAV), pour effectuer la localisation optimale de l'aéronef en fonction des moyens de géo-localisation (GPS, GALILEO, balises radios VHF, centrales inertielles) ;

Plan de vol (FPLN), pour saisir les éléments géographiques constituant le squelette de la route à suivre (procédures de départ et d'arrivée, points de passages (waypoints), airways) ;

Base de données de navigation (NAVDB), pour construire des routes géographiques et des procédures à partir de données incluses dans les bases (points, balises, legs d'interception ou d'altitude...) ;

Base de données de performance contenant les paramètres aérodynamiques et moteurs de l'appareil.

Trajectoire latérale TRAJ : pour construire une trajectoire continue à partir des points du plan de vol, respectant les performances avion et les contraintes de confinement (RNP) ;

Prédictions PRED : pour construire un profil vertical optimisé sur la trajectoire latérale ;

Guidage, GUID pour guider dans les plans latéraux et verticaux l'aéronef sur sa trajectoire 3D, tout en optimisant la vitesse ;

Liaison de donnée numérique DATALINK pour communiquer avec les centres de contrôle et les autres aéronefs.

A partir d'un plan de vol prédéfini (liste de points de passage appelés « waypoints ») et de procédures (relatives aux aspects de : départ, arrivées, routes aériennes, missions), le FMS de l'aéronef leader A1 est adapté pour calculer la trajectoire 3D cible (coordonnées géographiques en 3 dimensions) de l'aéronef A1, en fonction de la géométrie entre les points de passage, des performances de l'avion et des contraintes du plan de vol (altitude, vitesse, temps, pente). Cette trajectoire peut être actualisée dans le temps en fonction de certains facteurs (météo, réglementaires, trafic aérien etc).

A partir des senseurs de position disponibles sur l'aéronef A1 (GPS, centrales inertielles IRS, récepteur balises radios VOR, DME..) le FMS de l'aéronef leader A1 est adapté pour établir à tout instant son vecteur 3D (position 3D, vitesse 3D). Similairement, à partir des senseurs de position disponibles sur l'aéronef accompagnateur A2, le FMS de l'aéronef A2 est adapté lui aussi pour établir à tout instant son vecteur 3D.

Les aéronefs A1 et A2 dans le mode de réalisation considéré comprennent des moyens de communication sans fil. L'aéronef A1 est en outre adapté pour transmettre en temps réel son vecteur 3D couramment établi à l'aéronef A2, via ces moyens de communication sans fil. L'aéronef A2 est en lui adapté pour recevoir, via ces moyens de communication sans fil, le vecteur 3D couramment établi de l'aéronef A1, et pour le traiter en temps réel. L'aéronef A1 est en outre adapté pour transmettre en temps réel sa trajectoire cible 4D couramment établie à l'aéronef A2. L'aéronef A2 est en outre adapté pour collecter, via ces moyens de communication sans fil ou par d'autres moyens, la trajectoire cible 4D de l'aéronef A1.

Le FMS de l'aéronef leader A1 est adapté pour, à partir de la trajectoire 4D calculée et de son vecteur 3D établi, déterminer des consignes de guidage qui sont communiquées au pilote, ou au pilote automatique, de l'avion leader A1.

A partir notamment de la trajectoire cible 4D calculée pour l'aéronef leader A1 et/ou du vecteur 3D reçu de l'aéronef leader A1, et à partir de la position couramment établie de l'aéronef accompagnateur A2, le dispositif de détermination automatique de consignes de pilotage 1 de l'aéronef accompagnateur A2 est adapté pour élaborer, relativement à chacun de ses axes latéral, vertical et longitudinal, des consignes de guidage permettant le suivi automatique de l'aéronef leader A1 avec l'espacement approprié. Le pilote automatique de l'aéronef A2 est adapté pour mettre en œuvre ces consignes.

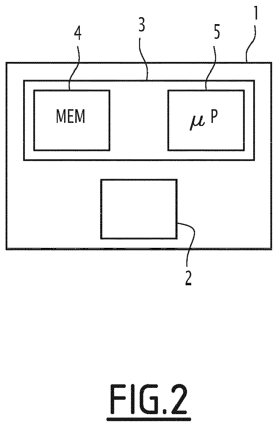

Une vue d'un dispositif électronique de détermination automatique de consignes de pilotage 1 dans un mode de réalisation de l'invention est représentée en figure 2. Le dispositif 1 comprend ici une interface de collecte de données 2 et un module de traitement 3.

L'interface de collecte de données 2 est adaptée pour collecter deux types de données de localisation du leader A1 :

- les données indiquant la trajectoire cible 4D actualisée de l'aéronef leader A1 et
- les données indiquant le vecteur 3D courant de l'aéronef leader A1. Typiquement les données de trajectoire 4D (TRAJ) comprennent :

  - une trajectoire latérale, i.e. dans le plan horizontal en 2D (2 dimensions) de l'aéronef A1 (axes X1, Y1) comprenant des points de passage et leurs coordonnées géographiques ;
  - un profil vertical, i.e. le plan vertical en 1D (Z1) ;
  - un profil de vitesse 1D axe longitudinal;
  - un profil temporel identifié par le temps de passage prévu sur chacun des points.

Les données de vecteur 3D courant (VECT) comprennent le vecteur d'attitude (position dans le plan horizontal, altitude) et le vecteur vitesse 3D tels qu'effectivement mesurés en temps réel pour l'aéronef A1.

Parfois les données du vecteur 3D courant VECT de l'aéronef leader A1 ne pourront être collectées par l'aéronef accompagnateur A2, par exemple du fait de problème de radio transmission, de brouillage, de capteurs défaillants sur l'aéronef leader A1.

Il peut s'avérer aussi que toutes les composantes de la trajectoire TRAJ ne soient pas connues à chaque instant donné. Le minimum est la trajectoire latérale, sinon la trajectoire est considérée comme non disponible, mais les 2 autres composantes (vertical, vitesse) peuvent être ou non disponibles.

Par la suite, comme les paramètres de chacune des dimensions sont analysés et utilisés de manière indépendante les uns des autres pour calculer les paramètres de guidage du mobile accompagnateur, les solutions hybrides quand la disponibilité de la position courante est perdue et/ou la disponibilité de la trajectoire cible 4D est partielle seront traitées.

Les informations de guidage (dites encore consignes de pilotage) sont généralement des consignes sur chacun des 3 axes : en roulis, tangage (angle de tangage (pitch) ou facteur de charge) et en vitesse, élaborées en fonction des écarts, sur chacun des 3 axes de l'aéronef, entre la position courante (ou vecteur courant) du leader et la position courante (ou vecteur courant) de l'accompagnateur, calculées pour l'aéronef au guidage duquel ces consignes sont destinées.

Chacune de ces consignes est ainsi élaborée en général à partir d'une différence entre une valeur cible (par exemple Altitude cible Zc) et une valeur courante (par exemple Altitude courante Z), et dans un mode de réalisation de gains d'amortissement K1 et de limiteurs, et parfois en outre d'une différence entre les dérivées de ces valeurs (par exemple vitesse verticale cible Vzc et vitesse verticale courante Vz) et parfois en fonction d'autres gains et amortissement K2. Dans un mode de réalisation de l'invention, l'altitude cible est l'altitude de l'avion cible additionnée d'une valeur d'étagement (+ ou - selon que l'aéronef accompagnateur est au-dessus ou en-dessous de l'aéronef leader).

Ainsi la consigne verticale de facteur de charge commandé Nzc a dans un mode de réalisation une forme Nzc = K1 (Z-Zc) + K2(Vz -Vzc). Et Zc pourra suivre une loi de convergence vers la valeur d'étagement qui dépendra aussi de la distance entre les 2 aéronefs.

De même la consigne latérale pourra être un roulis commandé du genre fc = K1. XTK + K2. TKE (XTK = écart de distance entre aéronef suiveur et aéronef suivi additionné d'une valeur d'écartement, TKE = Track Angle error = différence entre le track de l'aéronef accompagnateur et le track de l'aéronef leader).

Des principes similaires sont mis en œuvre relativement à l'axe longitudinal, et également pour l'aspect vitesse.

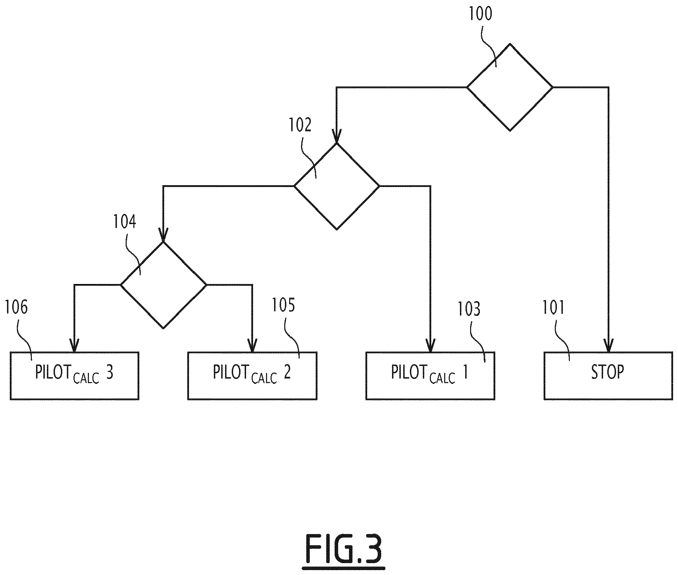

Dans le mode de réalisation considéré, le module de traitement 3 est adapté pour calculer les consignes de pilotage pour l'accompagnateur A2 pour chaque dimension parmi la dimension verticale (associée à l'étagement), la dimension longitudinale (associée au retrait) et la dimension latérale (associée à l'écartement) considérées indépendamment, un ensemble d'étapes tel que décrit schématiquement en figure 3.

Dans le mode de réalisation considéré, le module de traitement 3 comporte une mémoire 4 et un microprocesseur 5, et la mémoire 4 stocke des instructions logicielles qui, lorsqu'elles sont exécutées sur le microprocesseur 5, donnent lieu à la mise en œuvre, par le module de traitement 3, des étapes de la figure 3. La mise en œuvre de ces étapes est réitérée selon une période T, avec T comprise dans la plage 120 à 200 ms pour étagement et écartement de l'ordre de 1s pour retrait

Dans un autre mode de réalisation, le module de traitement 3 est réalisé chacun sous forme d'un composant logique programmable, tel qu'un FPGA (de l'anglais *Field Programmable Gate Array),* ou encore sous forme d'un circuit intégré dédié, tel qu'un ASIC (de l'anglais *Applications Specific Integrated Circuit).*

Suivant les modes de réalisation, un mode de vol en formation ou plusieurs modes de vol en formation sont considérés, chaque mode étant associé à un ensemble distinct d'espacement minimal comprenant une valeur minimum d'étagement, valeur minimum de retrait et une valeur minimum d'écartement.

En référence à la figure 3, dans une étape 100, il est déterminé si, parmi les données collectées relatives à l'aéronef leader A1, les données indiquant la position courante de l'aéronef leader A1 relativement à la dimension considérée X1, Y1, ou Z1 ou les données de trajectoire cible 4D, relativement à la même dimension considérée de l'aéronef leader A1 correspondant à un temps de passage égal au moment courant sont disponibles.

Si non, dans une étape 101, le vol en formation est abandonné.

Si oui, il est alors déterminé, dans une étape 102, si, parmi les données collectées relatives à l'aéronef leader A1, les données VECT indiquant le vecteur 3D courant de l'aéronef leader A1 relativement à la dimension considérée sont disponibles.

Si non (i.e. si les données indiquant le vecteur 3D courant de l'aéronef leader A1 relativement à la dimension considérée ne sont pas disponibles), dans une étape 103, des consignes de pilotes de l'aéronef accompagnateur A2 sont déterminées, relativement à la dimension considérée, en fonction d'une méthode de calcul, $PILOT_{CALC}1$, utilisant en entrée, outre le vecteur 3D couramment établi de l'aéronef A2, lesdites données de trajectoire 4D cible collectées correspondant à un temps de passage égal au moment courant et la valeur minimale d'espacement prédéfinie correspondant à la dimension considérée (qui est soit une valeur minimum d'étagement pour l'axe Z2, soit une valeur minimum de retrait pour l'axe X2, soit une valeur minimum d'écartement pour l'axe Y2) pour le mode de vol en formation préalablement sélectionné. La méthode de calcul $PILOT_{CALC}1$ est donc une méthode se servant des données de trajectoire cible 4D seulement du leader A1 et ne nécessitant pas les données indiquant la position courante de l'aéronef A1 (notamment la position cible de l'aéronef accompagnateur A2 sur chacun des axes considérés (qui sert à déterminer les écarts entre sa position courante et sa position cible, et donc à déterminer les consignes de pilotage) est ainsi déterminée en fonction des données de trajectoire cible 4D seulement du leader A1 (et pas des données VECT) exploitées par $PILOT_{CALC}1$ et des valeurs minimum fixées à respecter d'étagement, de retrait et d'écartement).

Si oui (i.e. si les données VECT indiquant le vecteur 3D courant de l'aéronef leader A1 relativement à la dimension considérée sont disponibles), dans une étape 104, il est alors déterminé si, parmi les données collectées relatives à l'aéronef leader A1, les données de trajectoire, relativement à la dimension considérée, de l'aéronef leader A1 correspondant à un temps de passage égal au moment courant, sont disponibles.

Si non, dans une étape 105, des consignes de pilotage de l'aéronef accompagnateur A2 sont déterminées, relativement à la dimension considérée, en fonction d'une méthode de calcul, $PILOT_{CALC}2$, utilisant en entrée, outre la position couramment établie de l'aéronef A2, lesdites données du vecteur courant VECT du leader A1 collectées et la valeur minimale d'espacement prédéfinie correspondant à la dimension considérée pour le mode de vol en formation préalablement sélectionné. La méthode de calcul $PILOT_{CALC}2$ est donc une méthode se servant des données VECT seulement et ne nécessitant pas la connaissance de la trajectoire cible du leader A1 (notamment la position cible de l'aéronef accompagnateur A2 sur chacun des axes considérés (qui sert à déterminer les écarts entre sa position courante et sa position cible, et donc à déterminer les consignes de pilotage) est ainsi déterminée en fonction des données VECT seulement du leader A1 (et pas des données de trajectoire) exploitées par $PILOT_{CALC}2$ et des valeurs minimum fixées à respecter d'étagement, de retrait et d'écartement).

Si oui, dans une étape 106, des consignes de pilotes de l'aéronef accompagnateur A2 sont déterminées, relativement à la dimension considérée, en fonction d'une méthode de calcul, $PILOT_{CALC}3$, utilisant en entrée, outre le vecteur couramment établi de l'aéronef A2, lesdites données de vecteur 3D courant (VECT) du leader A1 collectées, les données de trajectoire cible 4D collectées correspondant à un temps de passage égal au moment courant et la valeur minimale d'espacement prédéfinie correspondant à la dimension considérée pour le mode de vol en formation préalablement sélectionné (notamment la position cible de l'aéronef accompagnateur A2 sur chacun des axes considérés (qui sert à déterminer les écarts entre sa position courante et sa position cible, et donc à déterminer les consignes de pilotage) est ainsi déterminée en fonction des données VECT du leader A1 et des données de trajectoire exploitées par $PILOT_{CALC}3$ et des valeurs minimum fixées à respecter d'étagement, de retrait et d'écartement).

Des exemples des méthodes de calcul $PILOT_{CALC}1$, $PILOT_{CALC}2$, $PILOT_{CALC}3$ selon les différentes dimensions sont décrits plus loin.

Une fois que l'ensemble des consignes de pilotage de l'aéronef A2 ont été déterminées pour l'ensemble des 3 dimensions, ces consignes sont délivrées par le module de traitement 3 au pilote automatique de l'aéronef accompagnateur A2 pour leur mise en œuvre.

Les étapes selon l'invention décrites ci-dessus relativement à la détermination des informations de guidage bien entendu servent également à déterminer les écarts selon les trois axes entre la position courante de l'aéronef leader et la position courante de l'aéronef accompagnateur à partir desquels les consignes de guidage sont élaborées dans un mode de réalisation, ces écarts suivant les modes de réalisation pouvant être affichés sur une interface homme-machine dans un autre aéronef.

Dans un mode de réalisation, le module de traitement 3 de l'aéronef accompagnateur A2 est en outre adapté pour contrôler le comportement de l'aéronef leader A1, comme décrit ci-dessous.

Nominalement, la position courante du leader A1 collectée devrait suivre la trajectoire de référence définie pour ce dernier.

Le module de traitement 3 de l'accompagnateur A2 est adapté, pour à partir d'un écart supérieur à un seuil donné sur une durée prédéterminée entre la trajectoire de référence et la position courante, identifier une situation de non validité des informations collectées comme le non suivi de la trajectoire de référence par le mobile leader ou la non réception des données courantes de position, et dès identification basculer, s'il utilisait alors une méthode de calcul PILOT$_{CALC}$3, de la méthode de calcul PILOT$_{CALC}$3 (données de trajectoire et données de position) à une méthode de calcul utilisant les données restant valides PILOT$_{CALC}$2 (données de position seules) ou PILOT$_{CALC}$1 (données de trajectoire seule), ce qui va impacter, en les augmentant, les écarts entre le leader A1 et le mobile accompagnateur A2. Le module de traitement 3 gèrera aussi le retour en validité des informations collectées et le choix du mode de calcul associé.

On notera que la fonction de détection d'écart supérieur à un seuil donné est, dans un mode de réalisation, un préalable à la détermination d'une consigne de guidage, mais peut aussi être utilisé en parallèle pour tout dispositif d'alerte (même s'il n'y a pas de guidage), laquelle alerte peut être utilisée et envoyée :

1) au mobile accompagnateur, dans le cas où il y a un pilote à bord
2) au sol pour un contrôleur (ou pilote de drone),
3) à un avion tiers qui n'est pas en formation mais est dans le dispositif de suivi de mission (ex : AWACS),
4) pour déclencher un mode de guidage spécifique sur l'accompagnateur.

Dans un mode de réalisation, plusieurs modes de vol en formation sont définis.

Le mode de vol en formation est défini par exemple par la « performance de navigation en formation » calculée à partir :

- des données fournies par l'aéronef leader A1 (de position ou/et de trajectoire cible 4D),
- du contrôle du comportement de l'aéronef leader A1 lorsqu'il ne suit plus la trajectoire cible lors de l'utilisation de la méthode de calcul PILOT$_{CALC}$3 décrit ci-dessus. alors le contrôle bascule sur l'axe correspondant vers le mode de calcul PILOT$_{CALC}$2,
- de la performance en précision de l'aéronef leader A1, autrement dit la précision du guidage du leader A1 proportionnellement au type des paramètres fournis par les senseurs du mobile leader (IRS, GPS...) : quand l'erreur de précision des capteurs de géolocalisation par exemple de A1 est supérieure aux valeurs limites de E1, E2 ou E3,
- de la performance en précision, autrement dit la précision du guidage, de l'aéronef accompagnateur A2 proportionnellement au type des paramètres fournis par les senseurs de l'accompagnateur A2 (IRS, GPS...) : quand l'erreur de précision des capteurs de géolocalisation par exemple de A2 est supérieure aux valeurs limites de E1, E2 ou E3,
- du référentiel des aéronefs A1, A2 (référentiel propre ou référentiel commun).

Dans le mode de réalisation considéré, 4 modes de vol en formation sont considérés. Un nombre autre quelconque pourra bien sûr être retenu.

Pour chacun de ces 4 modes, des valeurs limites d'étagement, retrait et écartement sont définies, selon le tableau 1 ci-dessous. Dans le cas présent, des valeurs minimales et maximales ont été fixées en mètres (m) ou en kilomètres par heure (km/h) ; dans d'autres modes de réalisation, seules des valeurs minimales sont définies.

[Tableau 1]

| Mode vol en formation | Etagement E1 (m) | Retrait E2 (km/h) | Ecartement E3 (m) |
|---|---|---|---|
| 1. « serré » | 5< E1< 100 | 1≤ E2< 10 | 5< E3< 100 |
| 2. « proche » | 100 ≤ E1< 500 | 10≤ E2< 50 | 100≤ E3< 1000 |
| 3. « lâche » | 500≤ E1< 1000 | 50≤ E2< 100 | 1000≤ E3< 5000 |

(suite)

| Mode vol en formation | Etagement E1 (m) | Retrait E2 (km/h) | Ecartement E3 (m) |
|---|---|---|---|
| 4. « Loin » | E1≥ 1000 | E2≥ 100 | E3≥ 5000 |
| Fenêtres des valeurs associées, pour chaque axe, au mode de vol en formation | | | |

Le mode de vol en formation initialement sélectionné est fonction de la mission envisagée. La mission définit aussi la stratégie en cas de perte de performance de navigation en formation : soit annuler la mission, soit la poursuivre en mode dégradé, autrement dit avec un espacement plus large.

Ainsi, quand une ou des situations telles que :

- l'aéronef accompagnateur A2 détecte que le leader ne suit pas la trajectoire cible ;

- l'aéronef accompagnateur A2 peut ne pas pouvoir tenir la valeur minimale définie initialement pour E1, E2 ou E3 ;

- l'aéronef leader A1 ne fournit pas les données de localisation requises pour le mode sélectionné ;

- la performance de précision de l'aéronef leader A1 s'est dégradée ou améliorée;

- la performance de précision de l'aéronef accompagnateur A2 s'est dégradée ou améliorée ;
surviennent, plusieurs actions sont possibles :

une action consiste à dégrader le niveau de mode de vol en formation, autrement dit augmenter l'écart entre l'aéronef leader A1 et son aéronef accompagnateur A2 si la mission l'autorise ;
une autre consiste à augmenter le niveau de mode de vol en formation, autrement dit réduire l'écart entre l'aéronef leader et son aéronef accompagnateur si la mission l'autorise ;
une autre consiste à abandonner le vol en formation.

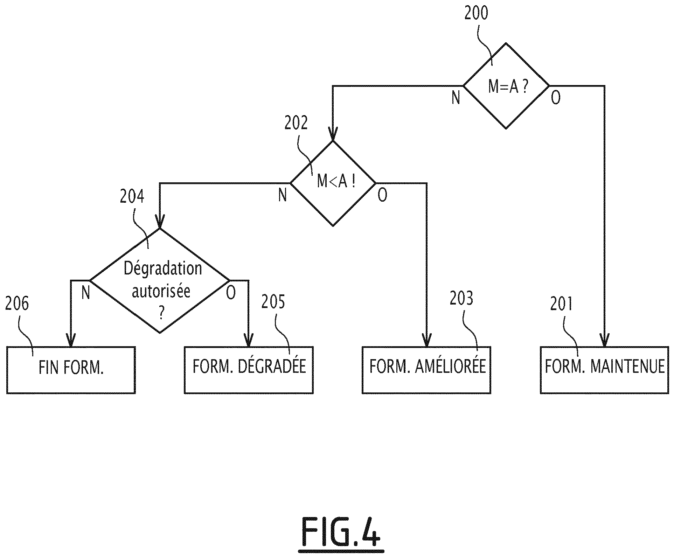

La figure 4 illustre un procédé d'actualisation de mode de vol en formation mis en œuvre par le module de traitement 3 de l'aéronef accompagnateur A2 dans un mode de réalisation de l'invention, relativement à un paramètre d'espacement Ei, i =1 , 2 ou 3. Le procédé est mis en œuvre respectivement pour chacun de ces paramètres E1, E2, E2.

Ce procédé est exécuté par le module de traitement 3 de manière régulière selon une période t prédéfinie, avec t par exemple comprise dans [1s, 5s]. Un changement (perte d'informations (les données vecteur avion ne sont plus reçues), ajout d'informations (la trajectoire Cible 4D est redevenue disponible) pourra aussi déclencher l'exécution du procédé sur un paramètre Ei ou sur l'ensemble des paramètres E1, E2, E3.

Le mode 1 est ici le meilleur niveau de mode de vol en formation, non améliorable et le mode 4 est le plus bas niveau de mode, non dégradable. Plus le numéro de niveau de mode décroit, moins le niveau de vol est bon.

Dans une étape 200, le mode de vol en formation actuellement en œuvre étant le mode A (A étant égal à 1, 2 3, ou 4 : cf. tableau 1) :

- la performance de navigation en formation est évaluée, en déterminant, dans un mode de réalisation :

+ les erreurs de précision de guidage des aéronefs A1 et A2 relatives à la dimension considérée (correspondant à Ei) ;
+ quel(s) type(s) de données TRAJ cible et/ou VECT courantes sont collectées par l'aéronef A2 ;
+ en outre, le mode référentiel utilisé : propre ou commun (le mode de vol serré n'étant envisageable qu'en mode référentiel commun par exemple) ;

- puis il est déterminé à quel niveau maximal de mode de vol en formation correspond la performance ainsi évaluée, à partir des critères suivants :

+ les erreurs de précision de guidage des aéronefs A1 et A2 relatives à la dimension considérée (correspondant à Ei) doivent rester inférieures à la valeur minimale d'espacement Ei dudit mode de vol en formation ; plus l'erreur de précision est faible, plus le niveau de mode de vol en formation peut être grand ;
+ à quels modes correspondent les données TRAJ et/ou VECT collectées par l'aéronef A2 (certains modes nécessitent que les données TRAJ ou encore VECT soient disponibles : par exemple en mode 1, les données VECT doivent être présentes - ; en mode 2, TRAJ cible et VECT doivent être disponibles, en mode 3 seul VECT peut être disponible, en mode 4 seule TRAJ cible peut être disponible.

Ce niveau de mode de vol en formation maximal en fonction de la performance de navigation en formation est nommé « niveau M » ci-dessous (M prenant la valeur 1, 2, 3 ou 4).

Puis, dans une étape 200, il est déterminé si le mode M est égal au mode A.

Si oui, le niveau de mode de vol en formation mis en œuvre est maintenu, dans une étape 201, pour la dimension considérée.

Si le mode M n'est pas égal au mode A, dans une étape 202, il est déterminé si le mode M est un mode meilleur que le mode courant A (dit autrement : si M < A), ce qui signifierait qu'une amélioration de niveau de mode est possible.

Si oui, dans une étape 203, un basculement de niveau de mode est commandé par le module de traitement 3, du niveau A au niveau M (par exemple, le niveau A est égal à 2, le niveau M est égal à 1 et il est commandé un basculement du niveau 2 au niveau 1).

Si le mode M n'est pas un mode meilleur que le mode courant A (dit autrement : si M > A), il est déterminé, dans une étape 204, si une dégradation de niveau de mode de vol en formation vers le niveau M est autorisée par le type de mission remplie par le vol en formation, à cet instant-là.

Si oui, dans une étape 205, un basculement de niveau de mode est commandé par le module de traitement 3, du niveau A au niveau M (par exemple, le niveau M est égal à 2, le niveau A est égal à 1 et il est commandé un basculement du niveau 1 au niveau 2).

Si non, dans une étape 206, il est mis fin au vol en formation.

Le basculement vers un autre mode tel que décrit ci-dessus ne vaut que pour la dimension considérée E1, E2, E3 pour la mise en œuvre de l'algorithme (autrement dit, seule la valeur minimale pour E1, E2, E3 change).

Dans un autre mode de réalisation, si le mode M déterminé pour E1, E2, E3 est appelé respectivement M1, M2 et M3, le module de traitement 3 bascule le niveau de mode de vol en formation vers le moins bon parmi M1, M2, M3 pour toutes les dimensions.

Comme décrit précédemment, à chacun des paramètres étagement, retrait et écartement correspondent ses propres données VECT et TRAJ qui ne seront pas tous disponibles au même moment. Il existera des solutions hybrides avec par exemple la TRAJ latérale disponible sur l'écartement et seulement le VECT sur l'étagement.

De même sur chacun des plans (latéral, vertical, longitudinal de l'avion ie X2, Y2, Z2), un niveau de performance de niveau de navigation est calculé.

Des exemples de méthodes de calcul $PILOT_{CALC}1$, $PILOT_{CALC}2$, $PILOT_{CALC}3$ sont exposées ci-après, tout d'abord en considérant que les aéronefs leader A1 et accompagnateur A2 ont leur propre référentiel.

Dans le mode référentiel propre, les données VECT ou TRAJ collectées par l'accompagnateur A2 depuis le leader A1 sont retranscrites dans le référentiel de l'accompagnateur A2 (X2, Y2, Z2) et les consignes de guidage sont calculées dans le référentiel de l'accompagnateur.

**Pour la dimension verticale (étagement E1) :**

La méthode $PILOT_{CALC}1$, utilisant les données TRAJ seules (et pas les données VECT), utilise donc les données de profil vertical de la trajectoire cible 4D pour la dimension considérée : $PILOT_{CALC}1$ construit un profil vertical pour l'accompagnateur A2 par décalage, sur l'axe vertical Z2 par rapport au profil vertical du leader A1, de la valeur minimum d'étagement fixée entre la trajectoire du leader A1 et la trajectoire de son accompagnateur A2. Autrement dit, la méthode $PILOT_{CALC}1$ effectue un décalage vertical de profil vertical, l'altitude de l'accompagnateur A2 est fixée par le suivi du profil vertical décalé.

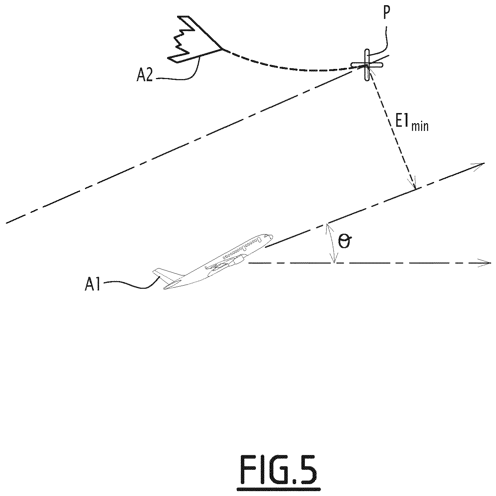

$PILOT_{CALC}2$, utilisant les données VECT uniquement et pas les données TRAJ, utilise donc l'altitude mesurée pour l'aéronef A1, pour la dimension considérée. Dans ce cas ne disposant que de l'attitude avion, en référence à la figure 5 où le point P désigne la position objectif de A2 (<i.e. là où il doit se trouver pour démarrer l'accompagnement), un segment vertical est construit avec une pente constante $\theta$ égale à celle de la vitesse de l'aéronef A1 telle qu'indiquée par les données VECT et le profil vertical du mobile accompagnateur A 2 est construit par décalage de la valeur minimum d'étagement $E1_{min}$ entre le mobile leader et son mobile accompagnateur. Avec les règles suivantes par exemple :

Si $\theta > \theta_{seuil}$ alors segment type PENTE

$$\text{Profil accompagnateur}(\theta_{accompagnateur}) = \text{Profil leader}(\theta_{leader}) + OFFSET_{Vertical}$$

Si $\theta \leq \theta_{seuil}$ alors segment type NIVEAU

$$\text{Profil accompagnateur}(\theta_{\text{accompagnateur}}) = 0 + OFFSET_{Vertical}$$

Une valeur possible pour $\theta_{seuil}$ = 0.15°.

PILOT$_{CALC}$3 utilise les données VECT et les données TRAJ et élabore les consignes de guidage de l'aéronef accompagnateur A2 en utilisant les mêmes modes de guidage que l'aéronef leader A1 : changement de niveau en montée, tenue d'altitude en palier, et pente/vitesse en descente.

La connaissance du profil vertical (TRAJ) et du vecteur avion (VECT) permet de mieux anticiper ou détecter des changements de pente de l'aéronef leader A1 : le profil vertical n'est pas changé et l'avion A1 s'en écarte, le profil vertical a changé et l'avion A1 va le rallier. Ces 2 modifications sont mieux gérées par le fait que l'on connaisse les 2 informations TRAJ ET VECT.

**Pour la dimension longitudinale (retrait E2)** :

La méthode PILOT$_{CALC}$1, utilisant les données TRAJ (et pas les données VECT), utilise donc les données de la trajectoire pour la dimension considérée et calcule un profil de vitesse longitudinale

- à partir du profil de vitesse comprenant des consignes de vitesse
- à partir d'une prédiction de vitesse issue de la trajectoire
- de l'adaptation de vitesse pour tenir l'écartement (latéral) en cas de virage
   avec

$$\text{SPEED}_{\text{accompagnateur}} = \text{SPEED}_{\text{trajectoire}} * \text{Rd/Ra}$$

où SPEED$_{accompagnateur}$ est la consigne de vitesse de l'aéronef accompagnateur A2 relative à la dimension longitudinale correspondant au retrait, SPEED$_{trajectoire}$ est la vitesse longitudinale de l'aéronef leader A1, Rd est le rayon de virage de l'accompagnateur A2 et Ra est le rayon de virage du leader A1 (cf. les calculs exposés relativement à la dimension latérale pour l'obtention des valeurs de rayon).

En effet, lors d'un virage le mobile accompagnateur A2 va se trouver soit à l'extérieur du virage, soit à l'intérieur, il aura donc un chemin plus court ou plus long et pour garder un écartement constant, une adaptation de la vitesse est utilisée.

PILOT$_{CALC}$2, utilise, pour la dimension considérée, les données VECT uniquement et pas les données TRAJ. Dans ce cas disposant à présent de la position et de la vitesse du mobile leader A1, il est réalisé un asservissement en utilisant la formule de commande de l'ASAS computer :

$$SPEED_{\text{accompagnateur}} = GROUND\ SPEED_{\text{leader}} - \frac{d_{error}}{\tau au}$$

où SPEED$_{accompagnateur}$ est la commande de vitesse de l'aéronef accompagnateur A2,
GROUND SPEED$_{leader}$ est la vitesse sol de l'aéronef leader A1,
$\tau au$ est la dynamique de la loi de commande et est une valeur temporelle située dans la plage [60, 180], et est par exemple égale à 120 ms,
$d_{error}$ est l'écart signé (correspondant à une marge de sécurité compensant l'inertie pour atteindre la vitesse visée) entre la position du mobile leader et la position du mobile accompagnateur et $d_{obj}$ est la valeur de retrait minimum. Dans ce mode les changements de vitesse sont subis avec aucune anticipation, ni adaptation en cas de virage.

PILOT$_{CALC}$3 utilise, pour la dimension considérée, les données VECT et les données TRAJ et élabore les consignes de guidage de l'aéronef accompagnateur A2 comme en PILOT$_{CALC}$1 avec en outre une meilleure détection d'un changement (dès détection d'une vitesse qui ne correspond plus au profil de vitesse ou d'un nouveau profil de vitesse) en utilisant le profil de vitesse et le vecteur vitesse cela permet de détecter la non validité du profil de vitesse et de rebasculer par exemple en PILOT$_{CALC}$2.

**Pour la dimension latérale (écartement E3)** :

La méthode PILOT$_{CALC}$1, utilisant, pour la dimension considérée, les données TRAJ (et pas les données VECT), utilise donc les données de la trajectoire pour la dimension considérée : les paramètres d'entrée de la loi de guidage latéral sont calculés en biaisant son entrée de manière à faire voler le mobile accompagnateur en décalage latéral. Pour les segments rectilignes, PILOT$_{CALC}$1 effectue un décalage latéral de la trajectoire de la valeur minimum d'écartement fixée entre la trajectoire du leader A1 et la trajectoire de son accompagnateur A2.

Pour les segments en virage, il sera nécessaire de mettre à jour le roulis nominal (Roll) avec le nouveau rayon de virage :

$$ROLL_{Nominal_{accompagnateur}} = \arctan\left(\frac{GROUND\ SPEED_{accompagnateur}^{2}}{g * R_d}\right)$$

avec GROUND SPEED$_{accompagnateur}$ : la vitesse sol de l'accompagnateur A2,
avec

$$R_a = \frac{GROUND\ SPEED_{leader}^{2}}{g*\tan(ROLL_{leader})}$$

avec

$$R_d = R_a + sign(Roll_{Leader}) * OFFSET_{latéral}$$

$R_a$= Rayon de virage décrit par le mobile leader A1
$R_d$= Rayon de virage décrit par le mobile accompagnateur A2.

Le mobile accompagnateur A2 a une limite de roulis. Cette limite est appliquée par la loi de guidage latéral standard. Pour que la trajectoire décalée de la valeur minimale d'écartement OFSETT$_{latéral}$ reste volable par le mobile accompagnateur A2, le rayon de virage devra respecter le domaine de rayons de virage défini par l'équation suivante :

$$R_d \in \left[\frac{SPEED_{accompagnateur_{MIN}}}{\psi dot}, min\left(\frac{g * \tan\phi_{MAX}}{\psi dot}, \frac{SPEED_{accompagnateur_{MAX}}}{\psi dot}\right)\right]$$

avec $\psi dot$ la vitesse de rotation verticale et $\Phi_{MAX}$ le roulis maximum

Autrement dit, le rayon de virage du mobile accompagnateur A2 doit être compris dans un intervalle dépendant de ses limites de vitesse et de son roulis maximal.

PILOT$_{CALC}$2, utilise les données VECT pour la dimension considérée uniquement et pas les données TRAJ. Dans ce cas, il est défini une trajectoire provisoire du mobile accompagnateur A2 basée sur l'attitude mobile leader A1. Il s'agit d'adapter les entrées de la loi de guidage latéral standard en se basant sur l'inclinaison des ailes du mobile leader pour définir le rayon de virage du mobile accompagnateur.

Avec $R_a$ et $R_d$ respectivement les rayons de virage du mobile leader A1 et du mobile accompagnateur A2.

$OFF_{lat}$, respectivement $OFF_{long}$, est la valeur minimale de décalage latéral (écartement minimal fixé), respectivement de décalage longitudinal (retrait minimal fixé), définissant la position visée dans le repère du mobile.

En prenant comme référence la vitesse sol du mobile leader et son roulis, on obtient en virage comme vu précédemment

$$R_a = \frac{GROUND\ SPEED_{leader}^{2}}{g * \tan(ROLL_{leader})}$$

dont on déduit

$$R_d = \sqrt{\left(R_a + OFF_{lat}\right)^2 + OFF^2_{long}}$$

$$ROLL_{Nominal_{accompagnateur}} = \arctan\left(\frac{GROUND\ SPEED_{accompagnateur}^2}{g*R_d}\right).$$

PILOT$_{CALC}$3 utilise, pour la dimension considérée, les données VECT et les données TRAJ relatives à la dimension latérale.

Comme pour les autres axes, la disponibilité de la trajectoire à court terme (segment courant et segment suivant) et celle de la position courante du mobile leader A1 permettent d'anticiper les changements de roulis nominaux dans le suivi de la trajectoire.

Des exemples de méthodes de calcul PILOT$_{CALC}$2 sont exposées ci-après, maintenant en considérant que les aéronefs leader A1 et accompagnateur A2 ont le même référentiel. Dans le mode en référentiel commun, seule la méthode PILOT$_{CALC}$2 est utilisée.

Dans un mode de réalisation, dans le concept de référentiel commun, le mobile accompagnateur A2 n'aura pas une position relative à son référentiel, mais cette fois dans le repère du mobile leader lui-même. Autrement dit, le mobile leader A1 et le mobile accompagnateur A2 forment un seul bloc durant la totalité de la phase de formation, il n'est plus question de ligne de position relative.

La solution consiste dans ce cas à calculer les commandes de vol du mobile accompagnateur A2 à partir des objectifs du mode de vol en formation traduits à travers les espacements minimum fixés : étagement, retrait et écartement.

Ainsi, à partir des valeurs d'étagement, retrait et écartement cibles, les paramètres de décalage (« offset ») sur chacun des axes du repère de navigation offset$_{Longitudinal}$, offset$_{Latéral}$, et offset$_{Vertical}$ sont calculés.

La formule de rotation utilisée par ce calcul est la suivante :

$$\begin{pmatrix} \text{offset Longitudinal} \\ \text{offset Latéral} \\ \text{offset Vertical} \end{pmatrix} = \begin{pmatrix} \cos\gamma & 0 & -\sin\gamma \\ 0 & 1 & 0 \\ \sin\gamma & 0 & \cos\gamma \end{pmatrix} * \begin{pmatrix} 1 & 0 & 0 \\ 0 & \cos\emptyset & -\sin\emptyset \\ 0 & \sin\emptyset & \cos\emptyset \end{pmatrix} * \begin{pmatrix} retrait \\ écartement \\ étagement \end{pmatrix}$$

avec $\gamma$ et $\emptyset$ respectivement la pente et le roulis de l'avion A1.

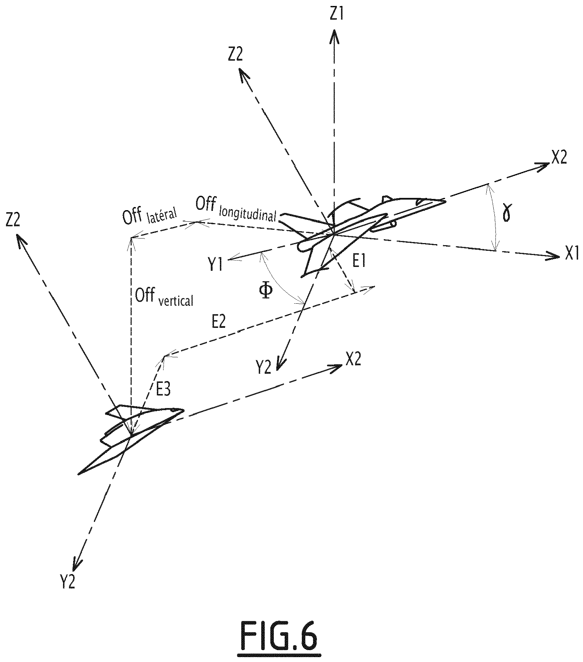

$\gamma\emptyset$Les paramètres offset$_{Longitudinal}$, offset$_{Latéral}$, et offset$_{Vertical}$ ainsi obtenus sur chacun des axes X2, Y2, Z2 et également représentés en figure 6 constituent les entrées des lois de pilotage standard pour définir les consignes de guidage en roulis, accélération et facteur de charge. Sur cette figure 6 qui traite du cas particulier du référentiel commun pour les 2 mobiles, X1, Y1, Z1 représente le référentiel initial et X2, Y2, Z2 le référentiel cible après modification de l'attitude du leader A1.

L'accompagnement d'un leader est une problématique commune à différents domaines. Dans le cas décrit plus spécifiquement ci-dessus, la solution est appliquée à un avion leader militaire accompagné par un autre aéronef par exemple (mais pas uniquement) sans pilote. Cela pourrait aussi être un mobile sans pilote accompagné par un autre mobile sans pilote.

En outre, l'invention est applicable au domaine terrestre, maritime en surface ou sous l'eau, du moment qu'un mobile leader est défini et qu'il fournit des paramètres appropriés à un mobile accompagnateur équipé d'un système d'asservissement sur une trajectoire. Dans le mode de réalisation décrit ci-dessus, le dispositif de détermination de consigne de guidage 1 détermine les consignes en fonction de valeurs minimales d'étagement, retrait et écartement à respecter. On notera que, plus généralement, selon l'invention, il est adapté pour déterminer ces consignes en fonction d'un ensemble d'au moins deux valeurs d'écart minimum à respecter parmi une valeur minimum d'étagement, une valeur minimum de retrait, une valeur minimum d'écartement.

Dans un mode de réalisation, la valeur minimum d'étagement, retrait et/ou d'écartement est remplacée une valeur représentative de cette valeur minimum, par exemple par sa dérivée (i.e. vitesse relative sur l'axe correspondant : respectivement vertical, longitudinal et/ou latéral).

Dans un autre mode de réalisation, le dispositif de détermination de consigne de guidage 1 est semi-automatique ou assisté.

Dans un mode de réalisation, l'élaboration des consignes de pilotages selon l'invention n'est aucunement limitée à un mobile accompagnateur, mais est mise en œuvre dans le cadre d'un vol en formation par N engins mobiles accompagnateurs avec des écarts minimums respectifs, dépendant de leurs positions relatives à l'engin mobile leader. Dans un mode de réalisation, les N mobiles accompagnateurs sont en fait des couples accompagnateur-leader, le leader i+1 étant l'accompagnateur de l'accompagnateur i et ainsi de suite, créant ainsi une chaîne.

**Revendications**

1. Dispositif électronique (1) de détermination d'informations de pilotage parmi des consignes de pilotage d'un engin mobile accompagnateur (A2) d'un engin mobile leader (A1) et des écarts de position entre une position courante dudit engin mobile leader et une position courante dudit engin mobile accompagnateur, ledit dispositif étant **caractérisé en ce qu'**il est adapté pour collecter des données de localisation de l'engin mobile leader parmi des données de localisation effective issues de mesures relatives à la localisation courante de l'engin mobile leader et des données de trajectoire cible de l'engin mobile leader et pour déterminer, en fonction desdites données de localisation collectées, des informations de pilotage de l'engin mobile accompagnateur en fonction d'un ensemble d'au moins deux valeurs à respecter par rapport à la localisation définie par les données collectées, lesdites valeurs à respecter étant représentatives de valeurs comprises parmi : une valeur minimum d'étagement, une valeur minimum de retrait, une valeur minimum d'écartement.

2. Dispositif électronique (1) de détermination d' informations de pilotage selon la revendication 1, adapté, lors de la détermination des informations de pilotage, pour sélectionner une méthode de calcul parmi différentes méthodes de calcul, en fonction, parmi les données dernièrement collectées, de la présence ou de l'absence de données d'une trajectoire cible de l'engin mobile leader (A1) et de la présence ou de l'absence de données de localisation effective issues de mesures relatives à la localisation courante de l'engin mobile leader.

3. Dispositif électronique (1) de détermination d'informations de pilotage selon la revendication 2, adapté pour déterminer, relativement à chacune d'au moins deux dimensions parmi les dimensions longitudinale, verticale et latérale associées auxdites au moins deux valeurs à respecter, les informations de pilotage, en sélectionnant pour chacune indépendamment, la méthode de calcul des informations relative à ladite dimension parmi différentes méthodes de calcul en fonction de la présence ou de l'absence, pour ladite dimension, desdites données de localisation effective issues de mesures relatives à la localisation courante de l'engin mobile leader et/ou desdites données de trajectoire cible de l'engin mobile leader.

4. Dispositif électronique (1) de détermination d'informations de pilotage selon l'une des revendications précédentes, adapté pour sélectionner un mode de vol en formation parmi plusieurs modes de vol en formation chacun associés à un ensemble différent de valeurs à respecter, ledit dispositif étant adapté pour modifier, en fonction desdites données de localisation effective et/ou de trajectoire cible collectées, ledit mode de vol en formation, en fonction :

    - dans les dernières données collectées, de la présence ou de l'absence de données extraites d'une trajectoire cible et de la présence ou de l'absence de données de localisation effective issues de mesures relatives à la localisation courante de l'engin mobile leader A1) ; et/ou
    - de la comparaison entre la précision des données de localisation effective issues de mesures relatives à la localisation courante de l'engin mobile leader et des valeurs d'écart minimum de l'ensemble des valeurs d'écart minimum.

5. Dispositif électronique (1) de détermination d'informations de pilotage selon l'une des revendications précédentes, adapté pour comparer, parmi les données collectées, les données de localisation effective issues de mesures relatives à la localisation courante de l'engin mobile leader (A1) et les données de trajectoire cible de l'engin mobile leader, détecter une situation de non-suivi de trajectoire en cas d'écart supérieur à un seuil déterminé.

6. Dispositif électronique (1) de détermination d'informations de pilotage selon l'une des revendications précédentes, dans lequel lesdites valeurs à respecter sont des valeurs parmi une dérivée temporelle d'une valeur minimum d'étagement, une dérivée temporelle d'une valeur minimum de retrait, une dérivée temporelle d'une valeur minimum d'écartement.

7. Engin mobile accompagnateur (A2) d'un engin mobile leader (A1), comprenant un dispositif électronique (1) de détermination d'informations de pilotage selon l'une quelconque des revendications précédentes et un module de pilotage automatique, semi-automatique ou assisté, adapté pour piloter automatiquement ledit engin en fonction desdits consignes.

8.  Procédé de de détermination d'informations de pilotage d'un engin mobile accompagnateur (A2) d'un engin mobile leader (A1) parmi des consignes de pilotage et des écarts de position entre une position courante dudit engin mobile leader et une position courante dudit engin mobile accompagnateur,
    ledit procédé étant **caractérisé en ce qu'**il comprend les étapes mises en œuvre par un module électronique de traitement et consistant à :

    - collecter des données de localisation de l'engin mobile leader parmi des données de localisation effective issues de mesures relatives à la localisation courante de l'engin mobile leader et des données de trajectoire cible de l'engin mobile leader et
    - déterminer, en fonction desdites données de localisation collectées, des informations de pilotage de l'engin mobile accompagnateur en fonction d'un ensemble d'au moins deux valeurs à respecter par rapport à la localisation définie par les données collectées, lesdites valeurs à respecter étant représentatives de valeurs comprises parmi : une valeur minimum d'étagement, une valeur minimum de retrait, une valeur minimum d'écartement.

9.  Procédé de détermination d'informations de pilotage selon la revendication 8, comprenant une étape de sélection, lors de la détermination des informations de pilotage, d'une méthode de calcul parmi différentes méthodes de calcul, en fonction, parmi les données dernièrement collectées, de la présence ou de l'absence de données d'une trajectoire cible de l'engin mobile leader (A1) et de la présence ou de l'absence de données de localisation effective issues de mesures relatives à la localisation courante de l'engin mobile leader.

10. Programme d'ordinateur comportant des instructions logicielles qui, lorsqu'elles sont exécutées par un ordinateur, mettent en œuvre un procédé selon l'une quelconque des revendications 8 et 9.

FIG.1

## FIG.2

## FIG.3

## FIG.4

FIG.5

## FIG.6

Europäisches Patentamt

European Patent Office

Office européen des brevets

# RAPPORT DE RECHERCHE EUROPEENNE

Numéro de la demande

EP 19 21 2864

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JONGHO SHIN ET AL: "Formation flight control under communication failure", ROBOT COMMUNICATION AND COORDINATION, IEEE PRESS, 445 HOES LANE, PO BOX 1331, PISCATAWAY, NJ 08855-1331 USA, 15 octobre 2007 (2007-10-15), pages 1-4, XP058215458, ISBN: 978-963-9799-08-0 * le document en entier * ----- | 1-10 | INV. G05D1/10 |
| X | US 2005/165516 A1 (HAISSIG CHRISTINE M [US] ET AL) 28 juillet 2005 (2005-07-28) * alinéas [0044] - [0047], [0063] - [0066], [0076], [0093], [0094], [0100], [0126] - [0129]; figures 4,5,11,17 * ----- | 1-10 | |
| A | WAYDO S ET AL: "UAV as a Reliable Wingman: A Flight Demonstration", IEEE TRANSACTIONS ON CONTROL SYSTEMS TECHNOLOGY, IEEE SERVICE CENTER, NEW YORK, NY, US, vol. 15, no. 4, 1 juillet 2007 (2007-07-01), pages 680-688, XP011185990, ISSN: 1063-6536, DOI: 10.1109/TCST.2007.899172 * le document en entier * ----- | 1-10 | DOMAINES TECHNIQUES RECHERCHES (IPC) G05D |

Le présent rapport a été établi pour toutes les revendications

| Lieu de la recherche | Date d'achèvement de la recherche | Examinateur |
|---|---|---|
| Munich | 20 avril 2020 | Vañó Gea, Joaquín |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 21 2864

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-04-2020

| Document brevet cité au rapport de recherche | Date de publication | Membre(s) de la famille de brevet(s) | Date de publication |
|---|---|---|---|
| US 2005165516    A1 | 28-07-2005 | AUCUN | |

EPO FORM P0460

Pour tout renseignement concernant cette annexe : voir Journal Officiel de l'Office européen des brevets, No.12/82